Europäisches Patentamt

European Patent Office

Office européen des brevets

(19)

(11) Veröffentlichungsnummer : **0 114 201**
**B1**

(12) **EUROPÄISCHE PATENTSCHRIFT**

(45) Veröffentlichungstag der Patentschrift :
21.01.87

(21) Anmeldenummer : 83110572.1

(22) Anmeldetag : 22.10.83

(51) Int. Cl.⁴ : **G 02 B 26/10, G 02 B 7/18**

(54) Antrieb für einen um eine Schwingachse beweglichen Schwingspiegel bei optischen Geräten.

(30) Priorität : 17.01.83 DE 3301274

(43) Veröffentlichungstag der Anmeldung :
01.08.84 Patentblatt 84/31

(45) Bekanntmachung des Hinweises auf die Patenterteilung : 21.01.87 Patentblatt 87/04

(84) Benannte Vertragsstaaten :
DE FR GB

(56) Entgegenhaltungen :
FR-A- 2 032 266
GB-A- 1 158 795
GB-A- 2 097 148
US-A- 3 102 744
US-A- 4 158 845
US-A- 4 295 621
INSTRUMENTS AND EXPERIMENTAL TECHNIQUES,
Band 15, Nr. 5, September/Oktober 1972, Seiten 1522-
1523, New York, USA. G. S. DENISOV et al.: "Highspeed spectrometer based on an IKS-6 monochromator"

(73) Patentinhaber : Bodenseewerk Gerätetechnik GmbH
Alte Nussdorfer Strasse 15 Postfach 1120
D-7770 Überlingen/Bodensee (DE)

(72) Erfinder : Kordulla, Hans
Schillerstrasse 4
D-7700 Singen (DE)
Erfinder : Eckhardt, Reiner
Weinbergstrasse 36
D-7770 Überlingen (DE)

(74) Vertreter : Weisse, Jürgen, Dipl.-Phys. et al
Patentanwälte Dipl.-Phys. Jürgen Weisse Dipl.-Chem.
Dr. Rudolf Wolgast Bökenbusch 41 Postfach 11 03 86
D-5620 Velbert 11 Langenberg (DE)

EP 0 114 201 B1

## Beschreibung

Die Erfindung betrifft einen Antrieb für ein um eine Schwingachse bewegliches Teil, enthaltend

a) ein Antriebsglied das um eine Antriebsachse drehbar ist,

b) eine Koppel zwischen Antriebsglied und Teil, die

b₁) an einem Ende über ein allseitig bewegliches Gelenk außerhalb der Schwingachse an dem Teil angelenkt ist und

b₂) an dem anderen Ende über ein allseitig bewegliches Gelenk außerhalb der Antriebsachse an dem Antriebsglied angelenkt ist.

Ein solcher Antrieb ist bekannt durch die US-A-4 295 621. Diese Druckschrift zeigt eine Anordnung von Solarzellen o. dgl., die durch Drehung im Azimut bei gleichzeitiger Verschwenkung in der Elevation ständig nach der Sonne ausgerichtet gehalten wird. Bei dieser bekannten Einrichtung sitzt ein plattenförmiger Träger für Solarzellen o. dgl. um eine waagerechte Schwingachse schwenkbar am oberen Ende einer Säule, die ihrerseits von einem Stellmotor um eine vertikale Achse im Azimut verdrehbar ist. Zur Winkelverstellung des Trägers ist an einem mit der Säule verdrehbaren Tisch exzentrisch zu der vertikalen Drehachse eine Scheibe drehbar gelagert, die ein um eine Antriebsachse drehbares Antriebsglied bildet. Zwischen der Scheibe und dem Träger ist eine Koppel vorgesehen. Die Koppel ist an einem Ende über ein allseitig bewegliches Gelenk außerhalb der Schwingachse an dem Träger angelenkt und an dem anderen Ende über ein allseitig bewegliches Gelenk außerhalb der Antriebsachse an der Scheibe angelenkt. Die Scheibe wird von einem Stellmotor angetrieben, wodurch der Elevationswinkel des Trägers veränderbar ist.

In optischen Geräten, beispielsweise in Suchköpfen, werden Schwingspiegel verwendet, um einen optischen Strahlengang periodisch abzulenken. Es kann auf diese Weise in einem Suchkopf ein Gesichtsfeld abgetastet werden. Es kann aber auch eine Abtastung eines Spektrums bei einem Spektrometer erfolgen.

Der Erfindung liegt die Aufgabe zugrunde, einen kompakten und raumsparenden Antrieb für einen Schwingspiegel bei optischen Geräten zu schaffen.

Ausgehend von einem Antrieb der eingangs genannten Art wird diese Aufgabe dadurch gelöst, daß

c) das Teil ein Schwingspiegel zur periodischen Ablenkung eines Strahlenganges ist,

d) die Antriebsachse außerhalb der zur Schwingachse senkrechten, durch den Anlenkpunkt der Koppel an dem Schwingspiegel gehenden Ebene parallel zu dieser verläuft und weiterhin

e) der Schwingspiegel um eine Mittellage schwingt und

f) die Antriebsachse in einem Winkelbereich von ± 20° um die Senkrechte zur Spiegelebene in der Mittellage des Schwingspiegels verläuft.

Es ergibt sich so ein Antrieb, bei welchem die Antriebsachse im wesentlichen senkrecht zur Ebene des Schwingspiegels angeordnet werden kann, so daß sie im wesentlichen parallel zur optischen Achse eines optischen Abbildungssystems verläuft, dessen Strahlengang durch den Schwingspiegel gefaltet wird. Es ergibt sich eine kompakte und raumsparende Bauweise. Der Leistungsbedarf für den Antrieb kann gering gehalten werden.

Der Antrieb nach der US-A-4 295 621 ist zum periodischen Antreiben eines Schwingspiegels weder bestimmt noch in der dort dargestellten Form geeignet.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert:

Figur 1 zeigt schematisch-perspektivisch einen Antrieb für einen um eine Schwingachse beweglichen Schwingspiegel bei optischen Geräten in den verschiedenen Stellungen.

Figur 2 zeigt einen Längsschnitt durch eine bevorzugte Ausführungsform eines solchen Antriebs.

Figur 3 ist eine Ansicht von rechts in Fig. 2 gesehen.

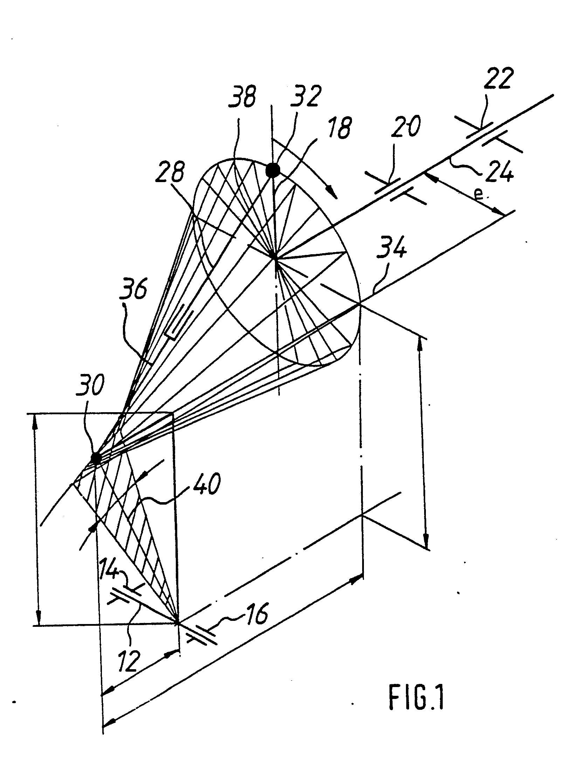

Ein Schwingspiegel 10, der in Fig. 1 nicht dargestellt ist, ist um eine Schwingachse mittels Lagern 14, 16 beweglich gelagert. Ein Antriebsglied 18 ist in Lagern 20, 22 um eine Antriebsachse 24 drehbar gelagert und wird durch einen nicht dargestellten Motor angetrieben. Das Antriebsglied 18 ist mit dem Schwingspiegel 10 über eine Koppel 28 verbunden. Die Koppel 28 ist an dem einen Ende über ein allseitig bewegliches Gelenk 30 außerhalb der Schwingachse 12 an dem Schwingspiegel 10 angelenkt. Am anderen Ende ist die Koppel 28 über ein allseitig bewegliches Gelenk 32 außerhalb der Antriebsachse 24 an dem Antriebsglied 18 angelenkt. Die Antriebsachse 24 verläuft, ohne die Schwingachse 12 zu schneiden, senkrecht zu einer die Schwingachse 12 enthaltenden Ebene. Die Antriebsachse 24 ist dabei gegenüber der zur Schwingachse 12 senkrechten, durch den Anlenkpunkt der Koppel 28 an dem Schwingspiegel 10 gehenden Ebene 34 um eine Strecke e versetzt.

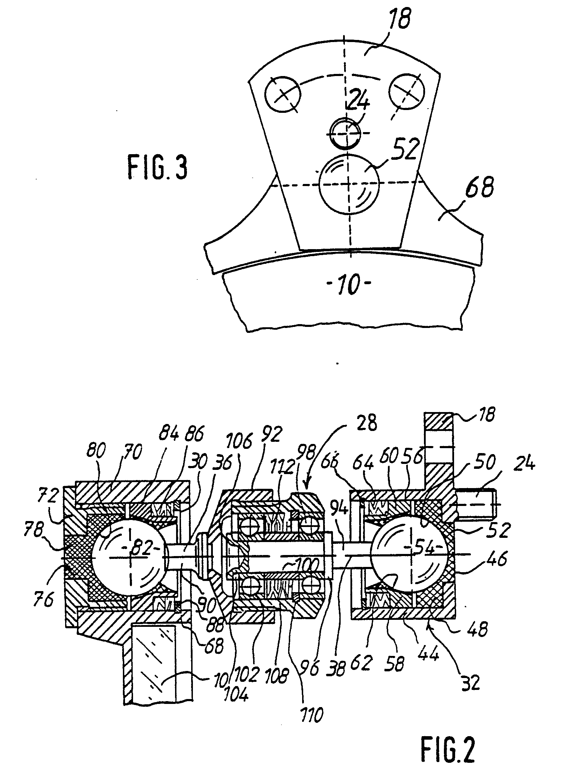

Die Antriebsachse 24 kann in einem Winkelbereich von ± 20° um die Senkrechte zur Spiegelebene in der Mittellage des Schwingspiegels 10 verlaufen. Die Koppel 28 besteht aus zwei um die Längsachse des Koppels 28 gegeneinander verdrehbaren Teilen 36 und 38, von denen der eine an dem Schwingspiegel 10 und der andere an dem Antriebsglied 18 angelenkt ist. Die allseitig beweglichen Gelenke 30 und 32 sind als Kugelgelenke ausgebildet, wie in Fig. 2 dargestellt ist. Auf diese Weise nehmen die Kugelgelenke 30 und 32 nur die hin- und hergehenden Schwenkbewegungen auf, während die durchgehende Drehbewegung um die Längsachse der Koppel 28 durch die Verdrehbarkeit der beiden Teile 36 und 38 ermöglicht wird.

Der Schwingspiegel 10 schwingt um eine Mittellage 40. Bei der bevorzugten Ausführungsform ist die Antriebsachse 24 senkrecht zur Spiegelebene in der Mittellage des Schwingspiegels 10. Der Schwingspiegel 10 ist Teil eines (nicht dargestellten) abbildenden optischen Systems mit gefaltetem Strahlengang, das eine optische Achse definiert. Die Antriebsachse 24 verläuft parallel zu dieser optischen Achse.

Die Antriebsachse 24 kann innerhalb eines Winkelbereichs von ± 20° zur optischen Achse verlaufen.

Fig. 2 und 3 zeigen eine konstruktive Ausbildung des Antriebs.

Das Antriebsglied 18 ist eine Scheibe die mit einer Achse mit einem (nicht dargestellten) Antriebsmotor verbunden ist. Die Scheibe bildet auf einer Seite ein Gehäuse 44, das nach links in der Figur vorsteht und nach links hin offen ist. Auf dem Grund des Gehäuses 44 rechts in der Figur ist in der Scheibe ein Durchbruch 46. In dem Gehäuse 44 sitzt eine Halbschale 48 aus Trockenlagerwerkstoff mit einer konkav-sphärischen Lagerfläche 50. Die Halbschale 48 ragt mit einem Ansatz 52 in den Durchbruch 46. In der Halbschale 48 sitzt eine durch Elektronenstrahlschweißung an den Teil 38 der Koppel 28 angeschweißte Präzisionskugel als Gelenkkugel 54. Eine zweite, ringförmige Halbschale 56 mit einem Metallring 58 und einem Lagerteil 60 mit konkavsphärischer Lagerfläche 62 ist über den Teil 38 geschoben und liegt auf der der Halbschale 48 gegenüberliegenden Seite an der Gelenkkugel 54 an. Die Halbschale 56 wird durch eine Wellfeder 64 an die Gelenkkugel 54 angedrückt. Die Wellfeder 64 stützt sich an einem Sprengring 66 ab, der in der Innenfläche des Gehäuses 44 eingerastet ist.

An einem Spiegelrahmen 68, in welchem der Schwingspiegel 10 gehaltert ist, ist ein zylindrisches Gehäuse 70 gebildet. In das Gehäuse 70 ist von links in der Figur ein Ring 72 mit einem gestuften Durchbruch 76 eingeschraubt. In dem Durchbruch 76 sitzt eine Halbschale 78 aus Trockenlagerwerkstoff mit einer zu dem Durchbruch 76 komplementären Außenfläche und einer konkav-sphärischen Lagerfläche 80. Von rechts her sitzt in der Lagerfläche 80 eine Gelenkkugel 82, die ebenfalls von einer Präzisionskugel gebildet ist, welche mittels Elektronenstrahlschweißung an den Teil 36 der Koppel 28 angeschweißt ist. Von rechts in der Figur ist in das Gehäuse 70 weiterhin eine ringförmige Halbschale 84 eingesetzt. Die Halbschale 84 ist ähnlich aufgebaut wie die Halbschale 56. Sie wird von einer Wellfeder 86 gegen die Gelenkkugel 82 gedrückt. Die Wellfeder 86 stützt sich an einem Sprengring 88 ab, der in einer Nut in der Innenfläche des Gehäuses 70 eingerastet ist.

Der Teil 36 der Koppel 28 enthält einen Zapfen 90, der an einem Ende die Gelenkkugel 82 trägt und an dem anderen Ende in einen glockenförmigen Teil 92 übergeht. Der glockenförmige Teil 92 ist auf seiner Innenfläche mit einem Gewinde versehen. Der Teil 38 der Koppel 28 enthält einen Zapfen 94 mit einem Bund 96. An dem einen, in der Figur rechten Ende trägt der Zapfen 94 die Gelenkkugel 54. Von dem anderen, linken Ende her ist auf den Zapfen 94 ein erstes Kugellager 98 aufgeschoben, das mit seinem Innenring an dem Bund 96 anliegt. Auf dem Zapfen 94 sitzt dann eine Abständshülse 100 sowie ein zweites Kugellager 102. Der Innenring des zweiten Kugellagers 102 ist durch einen Ring 104 und eine Umbördelung 106 des linken Endes des Zapfens 94 gehalten. Über die Außenringe der beiden Kugellager 98, 102 ist eine Hülse 108 geschoben. In der Innenfläche der Hülse 108 rastet ein Sprengring 110 ein, der an dem in der Figur linken Ende des Außenringes des Kugellagers 98 anliegt. An dem Ring 110 stützt sich eine Wellfeder 112 ab, welche die Abständshülse 100 umgibt und an dem Außenring des Kugellagers 102 anliegt. Auf diese Weise sucht die Wellfeder 112 die Außenringe der beiden Kugellager 98 und 102 axial auseinanderzudrücken. Die beiden Kugellager 98 und 102 werden dadurch vorgespannt. Die Hülse 108 ist mit einem Außengewinde versehen und mit diesem in das Innengewinde des glockenförmigen Teils 92 eingeschraubt.

Die maximale Schwingungsamplitude $\varphi_0$ ergibt sich, wenn der Versatz der Antriebsachse 24 gegenüber der durch den Anlenkpunkt 30 der Koppel 28 an dem Schwingspiegel 10 gehenden, zur Schwingachse 12 senkrechten Ebene 34 gleich ist der Exzentrizität e des Anlenkpunktes 32 der Koppel 28 an dem Antriebsglied 18 in Bezug auf die Antriebsachse 24. Dieser Fall ist in Fig. 1 dargestellt.

Es ergibt sich ein Antrieb, bei welchem die Antriebsachse 24 im wesentlichen senkrecht zur Ebene des Schwingspiegels 10 und parallel zur optischen Achse eines optischen Abbildungssystems mit auf der optischen Achse gefaltetem Strahlengang angeordnet werden kann. Der beschriebene Mechanismus arbeitet ohne Lagerspiel. Der Antrieb ist unempfindlich gegen Gehäuseschwingungen. Es ergibt sich eine kompakte und raumsparende Bauweise. Der Leistungsbedarf für den Antrieb kann gering gehalten werden.

Statt der in Fig. 2 dargestellten, gleitgelagerten Kugelgelenke können auch kugelgelagerte Gelenke vorgesehen werden, welche nicht nur die Schwenkbewegungen sondern auch die durchgehenden Drehbewegungen der Koppel 28 um die Längsachse zulassen. Es können dann die Kugellager 98 und 102 in Fig. 2 mit der zugehörigen Raumform entfallen.

## Patentansprüche

1. Antrieb für ein um eine Schwingachse bewegliches Teil, enthaltend

   a) ein Antriebsglied (18) das um eine Antriebsachse (24) drehbar ist,

b) eine Koppel (28) zwischen Antriebsglied (18) und Teil, die

$b_1$) an einem Ende über ein allseitig bewegliches Gelenk (30) außerhalb der Schwingachse (12) an dem Teil angelenkt ist und

$b_2$) an dem anderen Ende über ein allseitig bewegliches Gelenk (32) außerhalb der Antriebsachse (24) an dem Antriebsglied (18) angelenkt ist,
dadurch gekennzeichnet, daß

c) das Teil ein Schwingspiegel (10) zur periodischen Ablenkung eines Strahlenganges ist,

d) die Antriebsachse (24) außerhalb der zur Schwingachse (12) senkrechten, durch den Anlenkpunkt (30) der Koppel (28) an dem Schwingspiegel (10) gehenden Ebene parallel zu dieser verläuft und weiterhin

e) der Schwingspiegel (10) um eine Mittellage (40) schwingt und

f) die Antriebsachse (24) in einem Winkelbereich von ± 20° um die Senkrechte zur Spiegelebene in der Mittellage des Schwingspiegels verläuft.

2. Antrieb nach Anspruch 1, dadurch gekennzeichnet, daß

a) der Schwingspiegel (10) Teil eines abbildenden optischen Systems mit gefaltetem Strahlengang ist, das eine optische Achse definiert, und

b) die Antriebsachse (24) in einem Winkelbereich von ± 20° zu der optischen Achse verläuft.

3. Antrieb nach Anspruch 1, dadurch gekennzeichnet, daß der Versatz der Antriebsachse (24) gegenüber der durch den Anlenkpunkt (30) der Koppel (28) an dem Schwingspiegel (10) gehenden, zur Schwingachse (12) senkrechten Ebene (34) gleich ist der Exzentrizität (e) des Anlenkpunktes (32) der Koppel (28) an dem Antriebsglied (18) in bezug auf die Antriebsachse (24).

4. Antrieb nach Anspruch 1, dadurch gekennzeichnet, daß

a) die Koppel (28) aus zwei um die Längsachse der Koppel (28) gegeneinander verdrehbaren Teilen (36, 38) besteht, von denen der eine an dem Schwingspiegel (10) und der andere an dem Antriebsglied (18) angelenkt ist, und

b) die allseitig beweglichen Gelenke (30, 32) als Kugelgelenke ausgebildet sind.

## Claims

1. Drive system for an element movable about an axis of oscillation, containing :

a) a driving member (18) rotatable about a drive axis (24),

b) a coupler (28) between the driving member (18) and the element and which coupler

$b_1$) is linked with one end to the element *via* a universally movable joint (30) outside of the axis (12) of oscillation and

$b_2$) with the other end to the driving member (18) *via* a universally movable joint (32) outside of the drive axis (24),
characterised in that

c) the element constitutes an oscillating mirror (10) for periodically deflecting a path of rays,

d) the drive axis (24) extends outside of and parallel to a plane extending normally to the axis (12) of oscillation and through the pivot point (30) of the coupler (28) at the oscillating mirror (10) and furthermore

e) the oscillating mirror (10) oscillates about a central position and

f) the drive axis (24) extends in an angular range of ± 20° about the perpendicular to the mirror plane in the central position of the oscillating mirror.

2. Drive system according to claim 1, characterised in that

a) the oscillating mirror (10) constitutes a member of an imaging optical system containing a folded path of rays and defining an optical axis, and

b) the drive axis (24) extends in an angular range of ± 20° relative to the optical axis.

3. Drive system according to claim 1, characterised in that the offset of the drive axis (24) relative to the plane which extends through the pivot point (30) of the coupler (28) at the oscillating mirror (10) and normally to the axis (12) of oscillation, is equal to the eccentricity (e) of the pivot point (32) of the coupler (28) at the driving member (18) relative to the drive axis (24).

4. Drive system according to claim 1, characterised in that

a) the coupler (28) consists of two members (36, 38) which are rotatable relative to each other about the longitudinal axis of the coupler (28), one of the two members being linked to the oscillating mirror (10) and the other being linked to the driving member (18), and

b) the universally movable joints (30, 32) are constructed as ball-and-socket joints.

## Revendications

1. Entraînement pour un élément mobile autour d'un axe d'oscillation, comprenant

a) un membre d'entraînement (18) rotatif autour d'un axe d'entraînement (24),

b) une bielle (28) entre le membre d'entraînement (18) et l'élément,

$b_1$) qui est articulée avec une extrémité à l'élément par un joint (30) universellement mobile à côté de l'axe d'oscillation (12), et

$b_2$) qui est articulée avec l'autre extrémité au membre d'entraînement (18) par un joint (30) universellement mobile à côté de l'axe d'entraînement (24),
caractérisé par le fait que

c) l'élément est un miroir d'oscillation (10) destiné à la déviation périodique d'une marche des rayons,

d) l'axe d'entraînement (24) s'étend audehors du plan vertical relativement à l'axe d'oscillation (12) et passant par le point d'articulation (30) de la bielle (28) au miroir d'oscillation, et parallèle à celui-là, et

e) le miroir d'oscillation (10) pivote autour d'une position centrale (40), et

f) l'axe d'entraînement (24) s'étend dans un domaine angulaire de ± 20° autour de la verticale relative au plan de miroir dans la position centrale du miroir d'oscillation.

2. Entraînement selon la revendication 1, caractérisé par le fait que

a) le miroir d'oscillation (10) fait partie d'un système de reproduction optique avec la marche des rayons pliée, qui définit un axe optique, et

b) l'axe d'entraînement (24) s'étend dans un domaine angulaire de ± 20° relativement à l'axe optique.

3. Entraînement selon la revendication 1, caractérisé par le fait que le déplacement de l'axe d'entraînement (24) par rapport au plan vertical à l'axe d'oscillation (12) et passant par le point d'articulation (30) de la bielle (28) au miroir d'oscillation (10), est égal à l'excentricité (e) du point d'articulation (32) de la bielle (28) au membre d'entraînement (18) relativement à l'axe d'entraînement (24).

4. Entraînement selon la revendication 1, caractérisé par le fait que

a) la bielle (28) est constituée de deux parties (36, 38) rotatives l'une contre l'autre autour de l'axe longitudinal de la bielle (24) et dont l'une est articulée au miroir d'oscillation (10) et l'autre au membre d'entraînement (18), et

b) les joints (30, 32) universellement mobiles sont formés comme joint sphérique.

FIG.1

FIG.3

FIG.2